# EUROPÄISCHE PATENTSCHRIFT

(11) **EP 2 685 349 B1**
(45) Veröffentlichungstag und Bekanntmachung des Hinweises auf die Patenterteilung: **18.04.2018**
(21) Anmeldenummer: 13173381.8
(22) Anmeldetag: 24.06.2013
(51) Int. Cl.: G06F 1/20, G06F 1/18

(54) **Computersystem und Gehäuse für ein Computersystem**
Computer system and housing for a computer system
Système informatique et boîtier pour un système informatique

(30) Priorität: 10.07.2012 DE 102012106192
(43) Veröffentlichungstag der Anmeldung: 15.01.2014
(73) Patentinhaber: Fujitsu Technology Solutions Intellectual Property GmbH, 80807 München (DE)
(72) Erfinder: Neukam, Wilhelm, 86399 Bobingen (DE)
(74) Vertreter: Epping - Hermann - Fischer

(56) Entgegenhaltungen:
- WO-A1-2010/028350
- US-A- 5 243 493
- US-A1- 2007 184 245
- US-B1- 6 650 535
- Designwiz Solutions Inc. 2009: "Absopulse Electronics Ltd.; 280W, Rugged, Encapsulated, DC/DC Converter for Railway Environments", , Oktober 2010 (2010-10), XP055163030, Gefunden im Internet: URL:http://www.absopulse.com/Absopulse_Pre ssRel_RWY_280B_Nov2010.php [gefunden am 2015-01-19]
- Anonymous: "Lenovo launches design-focused 27" all-in-one PC - Neowin", , 10. Januar 2012 (2012-01-10), XP055163395, Gefunden im Internet: URL:http://www.neowin.net/news/lenovo-laun ches-design-focused-27-all-in-one-pc [gefunden am 2015-01-20]

## Beschreibung

Die Erfindung betrifft ein Computersystem aufweisend ein Gehäuse, wenigstens eine erste Kunststoffabdeckung, und wenigstens eine lüfterlose Kühlvorrichtung. Die Erfindung betrifft weiterhin ein Gehäuse insbesondere zur Verwendung in einem solchen Computersystem.

Aus dem Stand der Technik sind Ansätze zum passiven Kühlen, das heißt dem lüfterlosen und damit geräuschlosem Kühlen, eines Computersystems bekannt. Beispielsweise kann das Gehäuse eines Computersystems über mehrere Lüftungsöffnungen geöffnet sein, um Wärme an die Umgebung abzugeben. Zudem wird bei Computersystemen vielmals ein hoher Wert auf Leichtigkeit der Konstruktion und Gestaltungsmöglichkeiten gelegt, weshalb für die Gehäuseaußenseiten vermehrt Aluminiumwerkstoffe verwendet werden. Gehäuseseiten aus Aluminiumwerkstoffen können als Kühlkörper verwendet werden, um die im Inneren des Gehäuses entstehende Wärme an die Umgebung abzugeben.

Aus der US 2007/0184245 A1 ist eine Chassisstruktur für ein elektronisches System mit einer Mehrzahl von elektronischen Komponenten bekannt. Die Erfindung beschreibt eine Kompositchassisstruktur mit einer nicht-metallischen Abdeckung die an eine oder mehrere Oberflächen des Metallchassis angepasst ist, um zusätzliche Wärmekapazität und eine menschenfreundliche Chassisoberfläche zu erreichen.

Die WO 2010/028350 A1 beschreibt einen Computer mit einem Gehäuse mit Wänden die einen im Wesentlichen abgeschlossenen Innenraum von einer externen Umgebung abgrenzen. Im Innenraum sind verschiedene Computerkomponenten angeordnet. Der Computer weist wenigstens eine Wärmesenke auf, um Wärmeenergie an die Umgebung abzugeben. Ein Kühlelement ist thermisch mit der Wärmesenke und wenigstens einer der Computerkomponenten gekoppelt, um thermische Energie von der Computerkomponente über die Wärmesenke an die äußere Umgebung abzugeben.

Von der Firma ABSOPULSE Electronics LTD. ist ein DC/DC Wandler mit 280 Watt bekannt, der mit einem Silikongummi eingekapselt ist, um gegen Schock und Vibrationen, Staub und Luftverschmutzungen geschützt zu sein.

Problematisch bei der Kühlung von verhältnismäßig kleinen Wärmequellen im Inneren eines Gehäuses ist, dass diese ihre Wärme weitestgehend punktuell an eine Gehäuseseite abgeben, sodass auf der Gehäuseaußenseite in bestimmten Bereichen sehr hohe Temperaturen auftreten können.

Es ist eine Aufgabe der vorliegenden Erfindung, verbesserte Vorrichtungen zu beschreiben, die es gestatten, ein Computersystem lüfterlos zu kühlen, welches verhältnismäßig einfach aufgebaut ist.

Gemäß einem ersten Aspekt der Erfindung wird ein Gehäuse insbesondere zur Verwendung in einem Computersystem beschrieben. Das Gehäuse weist wenigstens eine erste Seite auf, welche zumindest überwiegend aus einem Aluminiumwerkstoff besteht. Weiter weist das Gehäuse eine erste Kunststoffabdeckung auf, welche an einer äußeren Oberfläche der ersten Seite des Gehäuses angeordnet ist. Das Gehäuse weist eine in das Gehäuse integrierte Wandlerschaltung zum Umwandeln einer primären Versorgungsspannung in eine sekundäre Versorgungsspannung und wenigstens eine zweite Kunststoffabdeckung auf, die auf der der äußeren Oberfläche gegenüberliegenden inneren Oberfläche an der ersten Seite des Gehäuses angeordnet ist. Die zweite Kunststoffabdeckung umgibt die integrierte Wandlerschaltung. Die erste Kunststoffabdeckung, die erste Seite des Gehäuses und die zweite Kunststoffabdeckung, die als Hitzeschild wirkt, bilden eine lüfterlose Kühlvorrichtung und sind schichtartig aufeinander angeordnet, so dass ein Wärmeübergang aus dem Inneren des Gehäuses an die Umgebung verzögert wird und sich Wärme großflächig in der ersten Seite des Gehäuses verteilt.

Zusätzlich können die erste Kunststoffabdeckung und/oder die zweite Kunststoffabdeckung und/oder die Oberseite des Gehäuses Öffnungen, beispielsweise in Form von Schlitzen oder Bohrungen, aufweisen, welche einer Belüftung des Gehäuses und/oder dem besseren Wärmetransport dienen.

Gemäß einem zweiten Aspekt der Erfindung wird ein Computersystem beschrieben, welches ein Gehäuse nach dem ersten Aspekt aufweist, wobei wenigstens eine erste Seite des Gehäuses zumindest überwiegend aus einem Aluminiumwerkstoff besteht. Weiter weist das Computersystem einen an dem Gehäuse angeordneten Bildschirm und wenigstens einen in das Gehäuse integrierten Energieverbraucher auf. Des Weiteren weist es die lüfterlose Kühlvorrichtung auf, wobei die lüfterlose Kühlvorrichtung durch die erste Kunststoffabdeckung, die zweite Kunststoffabdeckung und die erste Seite des Gehäuses gebildet wird.

Ein derartiges Gehäuse bzw. Computersystem erlaubt es, Wärme aus dem Inneren des Gehäuses sehr gleichmäßig an die Umgebung über die äußere Kunststoffabdeckung abzugeben. Bei typischen Wärmequellen, wie sie in einem Computer verbaut werden, entstehen an der ersten Seite des Gehäuses keine Bereiche mit hohen Temperaturen mehr, die entsprechende, zulässige Grenzwerte überschreiten.

Die erste Seite, die überwiegend aus dem Aluminiumwerkstoff besteht, hat die Funktion, Wärme aus dem Inneren des Gehäuses von Wärmequellen aufzunehmen. Die Wärme im Inneren des Gehäuses kann beispielsweise von der Wandlerschaltung oder aber auch dem wenigstens einen in das Gehäuse integrierten Energieverbraucher erzeugt werden. Aufgrund der Anordnung des wenigstens einen Energieverbrauchers oder der Wandlerschaltung im Inneren des Gehäuses kann die Wärme beispielsweise durch Wärmekonvektion, über direkten Kontakt mit der ersten Seite oder über eine sogenannte "Heat-Pipe", also ein Wärmeleitrohr, an die erste Seite des Gehäuses abgegeben werden. Auf der ersten Seite des Gehäuses ist die erste Kunststoffabdeckung angebracht, über die die aufgenommene Wärmemenge schließlich an die Umgebung abgegeben wird. Diese hat den Vorteil, dass der Wärmeübergang aus dem Inneren des Gehäuses an die Umgebung verzögert wird, da Kunststoff im Vergleich zu Aluminium einen vielfach niedrigeren Wärmeleitkoeffizienten besitzt. Bilden sich nun aufgrund der Anordnung des wenigstens einen Energieverbrauchers und/oder der Wechselwandlerschaltung im Inneren des Gehäuses punktuelle sogenannte "Hot-Spots", also Bereiche mit besonders hohen Temperaturen, aus, so wird deren Wärmeenergie großflächig in der ersten Seite des Gehäuses verteilt. Die verteilte Wärmeenergie wird dann über die Kunststoffschicht an die Umgebung abgegeben. Dies rührt daher, dass die Wärmeausbreitung aufgrund des hohen Wärmeleitkoeffizienten des Aluminiumwerkstoffes in der ersten Seite des Gehäuses merklich schneller ablaufen kann, als die Übertragung der Wärme von der ersten Seite des Gehäuses an die Umwelt durch die erste Kunststoffabdeckung.

Die Wandlerschaltung ist von einer zweiten Kunststoffabdeckung umgeben. Dies ist insbesondere aus sicherheitstechnischen Gründen vorteilhaft, um eventuell in der Wandlerschaltung angeordnete spannungsführende Bauteile von dem Aluminiumwerkstoff elektrisch zu isolieren. Die lüfterlose Kühlvorrichtung weist in diesem Fall neben der ersten Kunststoffabdeckung und der ersten Seite des Gehäuses auch die zweite Kunststoffabdeckung auf, die aufeinander angeordnet sind, sodass ein schichtartiger Aufbau entsteht. Die erste Kunststoffabdeckung und/oder die zweite Kunststoffabdeckung können dabei berührend und/oder mit Abstand auf der ersten Seite des Gehäuses angeordnet sein. Dadurch verstärkt sich der oben erwähnte Vorteil weiter. Die Wärme der Wandlerschaltung wird durch die zweite Kunststoffschicht großflächiger, breiter auf das Aluminium abgegeben, wodurch die Wärme weniger punktuell auf die Aluminiumgehäuseseite übertragen wird. Die dadurch bereits großflächiger und gleichmäßiger verteilte Wärme breitet sich in der Aluminiumschicht weiter aus und wird somit sehr gleichmäßig über die erste Kunststoffabdeckung an die Umgebung abgegeben. Durch diese Maßnahmen werden hohe Temperaturen an der Oberfläche der ersten Kunststoffabdeckung vermieden.

Gemäß einer weiteren Ausgestaltung können innerhalb des schichtartigen Aufbaus des Computersystems, welcher aus den beiden Kunststoffabdeckungen sowie der Gehäuseoberseite besteht, Öffnungen in Form von beispielsweise Bohrungen oder Schlitzen eingebracht sein, die die Kühlung begünstigen und für eine Luftzirkulation im Inneren des Gehäuses sorgen.

Weitere vorteilhafte Ausgestaltungen der Erfindung sind in der nachfolgenden ausführlichen Beschreibung von Ausführungsbeispielen sowie den abhängigen Patentansprüchen beschrieben.

Die Erfindung wird nachfolgend anhand von Ausführungsbeispielen unter Bezugnahme auf die angehängten Figuren beschrieben. In den Figuren werden gleichartige Komponenten unterschiedlicher Ausführungsbeispiele mit gleichen Bezugszeichen versehen.

In den Figuren zeigen:

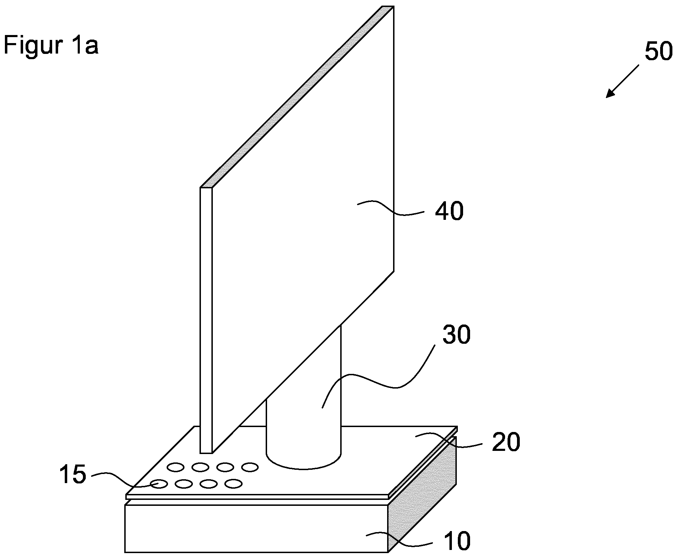

- Figur 1a: eine schematisch Ansicht eines Computersystems gemäß einem Ausführungsbeispiel der Erfindung,

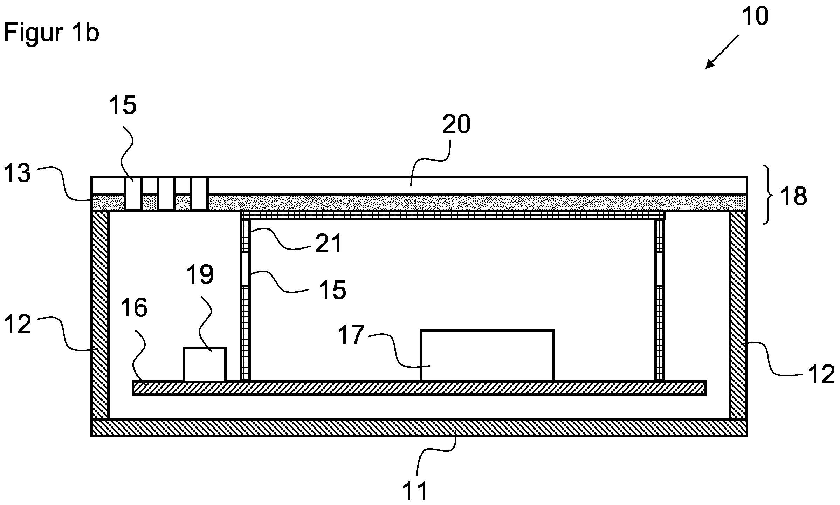

- Figur 1b: ein Querschnitt durch ein Gehäuse eines Computersystems gemäß einem Ausführungsbeispiel der Erfindung.

Zur Verdeutlichung der Wärmeabgabe eines sogenannten "All-in-One" Computersystems mit einer lüfterlosen Kühlvorrichtung wird unter Bezugnahme auf die Figur 1a und Figur 1b ein mögliches Ausführungsbeispiel eines derartigen Computersystems beschrieben.

Figur 1a zeigt eine beispielhafte Anordnung eines Computersystems 50, welches ein Gehäuse 10, eine erste Kunststoffabdeckung 20, mehrere Öffnungen 15, einen Tragarm 30 und einen Bildschirm 40 aufweist. Der Bildschirm 40 ist an dem Tragarm 30 montiert. Des Weiteren ist der Tragarm 30 mit einer Oberseite 13 des Gehäuses 10 verbunden, die zumindest überwiegend aus einem Aluminiumwerkstoff besteht, der eine ausreichende Stabilität zum Halten des Tragarms 30 mit dem Bildschirm 40 aufweist. Die Verbindung des Tragarms 30 mit der Oberseite 13 des Gehäuses 10 beziehungsweise die Verbindung des Tragarms 30 mit dem Bildschirm 40 kann beispielsweise durch starre Schraub- oder Schweißverbindungen, Scharniere oder Gelenke erfolgen.

Weiter ist in Figur 1b ein Querschnitt durch as Gehäuse 10 des Computersystems 50 gemäß Figur 1a gezeigt. Das Gehäuse 10 weist im dargestellten Querschnitt eine Unterseite 11 und Seitenwände 12 auf, die aus einem Metallwerkstoff, beispielweise einem Stahlblech oder einem Aluminiumwerkstoff, hergestellt sind. Weiter weist es eine Oberseite 13 aus einem Aluminiumwerkstoff auf, an welcher die erste Kunststoffabdeckung 20 angebracht ist. Weiter weist das Gehäuse 10 eine integrierte Leiterplatte 16, beispielsweise ein Mainboard mit darauf angeordneten integrierten Schaltkreisen, und einen Energieverbraucher 19, beispielsweise einen Prozessor, auf sowie eine in das Gehäuse 10 integrierte Wandlerschaltung 17, welche auf der Leiterplatte 16 angeordnet ist. Die Wandlerschaltung 17 ist dabei von einer zweiten Kunststoffabdeckung 21 umgeben. Die erste Kunststoffabdeckung 20, die Oberseite 13 des Gehäuses 10 sowie die zweite Kunststoffabdeckung 21 sind aufeinander, berührend angeordnet, sodass sich ein schichtartiger Aufbau ergibt. Alternativ kann der schichtartige Aufbau der lüfterlosen Kühlvorrichtung 18 auch so angeordnet sein, dass zwischen der ersten Kunststoffabdeckung 20, der Oberseite 13 des Gehäuses 10 und der zweiten Kunststoffabdeckung 21 jeweils ein Abstand besteht, so dass sich diese Schichten nicht berühren.

Im dargestellten Ausführungsbeispiel bilden diese drei Schichten eine lüfterlose Kühlvorrichtung 18. Zusätzlich sind in der ersten Kunststoffabdeckung 20 sowie der Oberseite 13 des Gehäuses 10 Öffnungen 15 eingebracht, die ebenfalls zum Kühlen des Gehäuseinneren beitragen.

Durch den Energieverbrauch des Energieverbrauchers 19 beziehungsweise durch die Wandlerschaltung 17 bilden sich Wärmequellen, die Wärme lokal an die Oberseite 13 bzw. die zweite Kunststoffabdeckung 21 abgeben, da die Wärme entgegen der Richtung der Schwerkraft nach oben steigt. Auf der Oberseite 13 des Gehäuses 10 würden somit möglicherweise Wärmebereiche entstehen, die zulässige Grenzwerte für ein sicheres Berühren überschreiten könnten. Um eine direkte Berührung zu vermeiden, ist auf der Oberseite 13 des Gehäuses 10 die erste Kunststoffabdeckung 20 angebracht. Die erste Kunststoffabdeckung 20 erreicht, dass die Wärmeabgabe aus dem Inneren des Gehäuses 10 träger wird, da ihre Wärmeleitfähigkeit im Vergleich zur Oberseite 13 des Gehäuses 10 um ein Vielfaches schlechter ist. Die Wärme wird deshalb etwas gleichmäßiger in der Oberseite 13 verteilt, bevor sie über die erste Kunststoffabdeckung 20 an die Umgebung abgegeben wird.

Zusätzlich ist die Wandlerschaltung 17 von der zweiten Kunststoffabdeckung 21 umgeben, wodurch die Wärme der Wandlerschaltung 17 sehr großflächig auf die Oberseite 13 eingebracht wird. Die zweite Kunststoffabdeckung 21 wirkt in diesem Fall auch als Hitzeschild. Im dargestellten Ausführungsbeispiel wird die von der zweiten Kunststoffabdeckung 21 breit aufgetragene Wärme der Oberseite 13 weiter gleichmäßig verteilt und über die erste Kunststoffabdeckung 20 großflächig an die Umgebung abgegeben.

In weiteren alternativen, nicht dargstellten Ausführungsbeispielen weist die lüfterlose Kühlvorrichtung 18 sogenannte "Heat-Pipes" auf, die Wärme einer Wärmequelle an eine Gehäuseaußenwand übertragen können. Auch dadurch würden punktuell hohe Temperaturen an der Gehäusewand entstehen. Durch die Vorhaltung der ersten Kunststoffabdeckung 20 wird ein direktes Berühren der Gehäusewand in diesem Fall verhindert.

Zudem können neben den Öffnungen 15 in der ersten Kunststoffabdeckung und der Oberseite 13 des Gehäuses 10 auch Öffnungen in der zweiten Kunststoffabdeckung 21 angebracht sein. In die zweite Kunststoffabdeckung eingebrachte Öffnungen sorgen für eine zusätzliche, bessere Wärmeabgabe und Luftzirkulation innerhalb des Gehäuses 10. Insbesondere Öffnungen, die in den Seitenwänden der zweiten Kunststoffabdeckung 21 eingebracht und beispielweise als lange Schlitze ausgestaltet sind, verstärken die gewünschten, bereits dargelegten Vorteile der Erfindung.

### Bezugszeichenliste

- 10: Gehäuse
- 11: Unterseite
- 12: Seitenwand
- 13: Oberseite
- 15: Öffnung
- 16: Leiterplatte
- 17: Wandlerschaltung
- 18: lüfterlose Kühlvorrichtung
- 19: Energieverbraucher
- 20: erste Kunststoffabdeckung
- 21: zweite Kunststoffabdeckung
- 30: Tragarm
- 40: Bildschirm
- 50: Computersystem

## Patentansprüche

1. Gehäuse (10) zur Verwendung in einem Computersystem (50), aufweisend
- wenigstens eine erste Seite des Gehäuses (10), welche zumindest überwiegend aus einem Aluminiumwerkstoff besteht;
- wenigstens eine erste Kunststoffabdeckung (20), welche an einer äußeren Oberfläche der ersten Seite des Gehäuses (10) angeordnet ist; und
eine in das Gehäuse (10) integrierte Wandlerschaltung (17) zum Umwandeln einer primären Versorgungsspannung in eine sekundäre Versorgungsspannung;
**dadurch gekennzeichnet, dass** das Gehäuse (10) wenigstens eine zweite Kunststoffabdeckung (21) aufweist, wobei die zweite Kunststoffabdeckung (21) auf der der äußeren Oberfläche gegenüberliegenden inneren Oberfläche an der ersten Seite des Gehäuses (10) angeordnet ist und die integrierte Wandlerschaltung (17) umgibt,
wobei die erste Kunststoffabdeckung (20), die erste Seite des Gehäuses (10) und die zweite Kunststoffabdeckung (21), die als Hitzeschild wirkt, eine lüfterlose Kühlvorrichtung (18) bilden und schichtartig aufeinander angeordnet sind, so dass ein Wärmeübergang aus dem Inneren des Gehäuses (10) an die Umgebung verzögert wird und sich Wärme großflächig in der ersten Seite des Gehäuses (10) verteilt.

2. Gehäuse (10) nach Anspruch 1, wobei die erste Kunststoffabdeckung (20) und/oder die zweite Kunststoffabdeckung (21) berührend oder beabstandet von der ersten Seite des Gehäuses (10) angeordnet sind.

3. Gehäuse (10) nach Anspruch 1 oder 2, bei welchem die erste Kunststoffabdeckung (20) und/oder die zweite Kunststoffabdeckung (21) und/oder die erste Seite des Gehäuses (10) Öffnungen (15) aufweisen.

4. Computersystem (50) aufweisend
- ein Gehäuse (10) nach einem der Ansprüche 1 bis 3,
- ein an dem Gehäuse (10) angeordneter Bildschirm (40);
- wenigstens einen in das Gehäuse (10) integrierten Energieverbraucher (19); und
- die lüfterlose Kühlvorrichtung (18), wobei die lüfterlose Kühlvorrichtung (18) durch die erste Kunststoffabdeckung (20), die zweite Kunststoffabdeckung (21) und die erste Seite des Gehäuses (10) gebildet wird.

5. Computersystem (50) nach Anspruch 4, bei welchem die erste Seite des Gehäuses (10) eine Oberseite (13) ist.

## Claims

1. Housing (10) to be used in a computer system (50), comprising
- at least a first side of the housing (10), which at least predominantly consists of an aluminum material;
- at least a first plastic covering (20), which is arranged on an outer surface of the first side of the housing (10); and
a converter circuit (17) integrated in the housing (10) for converting a primary supply voltage into a secondary supply voltage;
**characterized in that** the housing (10) comprises at least a second plastic covering (21), wherein the second plastic covering (21) is arranged on the first side of the housing (10) on the inner surface opposite the outer surface and surrounds the integrated converter circuit (17),
wherein the first plastic covering (20), the first side of the housing (10), and the second plastic covering (21), which acts as heat shield, form a fanless cooling device (18), and are arranged one on top of the other in a layer-type manner, so that a heat transfer out of the interior of the housing (10) to the environment is delayed and heat is distributed over a large area in the first side of the housing (10).

2. Housing (10) according to claim 1, wherein the first plastic covering (20) and/or the second plastic covering (21) are arranged in a manner as to touch or to be spaced from the first side of the housing (10).

3. Housing (10) according to claim 1 or 2, in which the first plastic covering (20) and/or the second plastic covering (21) and/or the first side of the housing (10) comprise openings (15).

4. Computer system (50), comprising
- a housing (10) according to one of the claims 1 to 3,
- a monitor (40) arranged on the housing (10);
- at least one energy consumer (19) integrated in the housing (10); and
- the fanless cooling device (18), wherein the fanless cooling device (18) is formed by the first plastic covering (20), the second plastic covering (21), and the first side of the housing (10).

5. Computer system (50) according to claim 4, in which the first side of the housing (10) is an upper side (13).

## Revendications

1. Boîtier (10) destiné à être utilisé dans un système informatique (50), présentant
- au moins un premier côté du boîtier (10), lequel est au moins principalement constitué d'un matériau en aluminium ;
- au moins un premier recouvrement (20) en matière plastique, lequel est disposé sur une surface extérieure du premier côté du boîtier (10) ; et
- un circuit convertisseur (17) intégré dans le boîtier (10), destiné à convertir une tension d'alimentation primaire en une tension d'alimentation secondaire ;
**caractérisé en ce que** le boîtier (10) présente au moins un deuxième recouvrement (21) en matière plastique, le deuxième recouvrement (21) en matière plastique étant disposé sur le premier côté du boîtier (10), sur la surface intérieure opposée à la surface extérieure, et entourant le circuit convertisseur (17) intégré,
le premier recouvrement (20) en matière plastique, le premier côté du boîtier (10) et le deuxième recouvrement (21) en matière plastique, lequel agit en tant qu'écran thermique, formant un dispositif de refroidissement (18) exempt de ventilateur et étant disposés les uns au-dessus des autres en type de couches, de sorte qu'un transfert de chaleur de l'intérieur du boîtier (10) aux environs est ralenti et que la chaleur se répartit sur une grande surface dans le premier côté du boîtier (10).

2. Boîtier (10) selon la revendication 1, le premier recouvrement (20) en matière plastique et/ou le deuxième recouvrement (21) en matière plastique étant disposés en touchant le premier côté du boîtier (10) ou en y étant écartés.

3. Boîtier (10) selon la revendication 1 ou 2, dans lequel le premier recouvrement (20) en matière plastique et/ou le deuxième recouvrement (21) en matière plastique et/ou le premier côté du boîtier (10) présentent des ouvertures (15) .

4. Système informatique (50) présentant
- un boîtier (10) selon l'une quelconque des revendications 1 à 3,
- un écran (40) disposé sur le boîtier (10) ;
- au moins un consommateur d'énergie (19) intégré dans le boîtier (10) ; et
- le dispositif de refroidissement (18) exempt de ventilateur, le dispositif de refroidissement (18) exempt de ventilateur étant formé par le premier recouvrement (20) en matière plastique, par le deuxième recouvrement (21) en matière plastique et par le premier côté du boîtier (10).

5. Système informatique (50) selon la revendication 4, dans lequel le premier côté du boîtier (10) est un côté supérieur (13).
